# EUROPEAN PATENT APPLICATION

(11) **EP 4 503 223 A1**
(43) Date of publication of application: **05.02.2025**
(21) Application number: 23777816.2
(22) Date of filing: 13.03.2023
(51) Int. Cl.: H01M 10/0525, H01M 4/36, H01M 4/38, H01M 4/62

(54) **POSITIVE ELECTRODE LITHIUM SUPPLEMENTING ADDITIVE AND PREPARATION METHOD THEREFOR, POSITIVE ELECTRODE MATERIAL, AND SECONDARY BATTERY**

(30) Priority: 29.03.2022 CN 202210322015
(71) Applicant: Shenzhen Innovazone Technology Co., Ltd., Shenzhen, Guangdong 518000 (CN); Foshan Innovazone Technology Co., Ltd., Foshan, Guangdong 528000 (CN); Qujing Innovazone Technology Co., Ltd., Qujing, Yunnan 655000 (CN)
(72) Inventor: LAI, Jiayu, Shenzhen, Guangdong 518000 (CN); WAN, Yuanxin, Shenzhen, Guangdong 518000 (CN); KONG, Lingyong, Shenzhen, Guangdong 518000 (CN); TAN, Qiqing, Shenzhen, Guangdong 518000 (CN); ZHANG, Li, Shenzhen, Guangdong 518000 (CN); ZHAO, Zhongke, Shenzhen, Guangdong 518000 (CN)
(74) Representative: Patentwerk B.V.
(86) International application number: PCT/CN2023/081106
(87) International publication number: WO 2023/185439

(57) **Abstract**

The present application relates to the technical field of additives for lithium-ion batteries, and provides a cathode lithium-supplementing additive, which includes a lithium-supplementing material and a coating layer coated on a surface of the lithium-supplementing material, and a material of the coating layer includes carbon and/or nitrogen. Since the cathode lithium-supplementing additive provided by the present application contains the lithium-supplementing material for lithium supplementing, when the battery is in the first cycle of charging, the lithium-supplementing material can supplement the lithium ions consumed by the anode in the formation of the SEI film, so that the lithium ions in the battery system remain abundant, thereby improving the initial charging efficiency and overall electrochemical performance of the battery. Since the coating layer contained is coated on the surface of the lithium-supplementing material, the coating layer can isolate the lithium-supplementing material from contact with the air, and can avoid corrosion of the highly active lithium-supplementing material by water, oxygen, and carbon dioxide in the air, thus improving the stability of the lithium-supplementing material. In addition, since the coating layer is conductive, the overall conductivity of the cathode lithium-supplementing additive can be increased, thereby ensuring that the voltage changes are relatively stable during the charging process.

## Description

This application claims the priority of the Chinese patent application submitted to the CNIPA on Mar. 29, 2022, with an application number 202210322015.4 and titled "CATHODE LITHIUM-SUPPLEMENTING ADDITIVE, PREPARATION METHOD THEREOF, CATHODE MATERIAL, AND SECONDARY BATTERY", the entire contents of which are incorporated by reference in this application.

### TECHNICAL FIELD

The present application relates to the field of cathode additives for lithium-ion batteries, more particularly to a cathode lithium-supplementing additive, a preparation method thereof, a cathode material, and a secondary battery.

### BACKGROUND

With the rapid development of the field of new energy, it is an urgent problem to be solved to improve the energy density of battery in the field of rechargeable lithium-ion batteries (LIBs), such as power batteries, energy storage batteries, and 3C digital consumer batteries. The electrode material of the battery is the main factor restricting the improvement of the energy density of battery. During the first charge and discharge process, an electrochemical reaction occurs at an anode interface of the rechargeable lithium-ion battery to generate an inert solid interface film (SEI), and lithium ions consumed in this process are converted into an inert layer, thus losing the activity and causing the overall capacity of the lithium-ion battery to decrease irreversibly. At the anode, graphite or hard carbon materials which are widely used show about 10% irreversible capacity loss during the first charge and discharge process, while for a silicon anode having a higher theoretical capacity, the irreversible capacity loss during the first charge and discharge is about 15%. Therefore, the addition of a lithium-rich compound as a cathode lithium-supplementing additive in the preparation process of a lithium-ion battery can make up for the capacity loss caused by the formation of the SEI. Binary lithium compounds have relatively high theoretical capacities and have received widespread attention, in which, Li₃N has a theoretical capacity of 2309 mAh/g, making it an ideal cathode lithium-supplementing additive.

However, Li₃N has strong alkalinity, which easily leads to removal of HF from a polyvinylidene fluoride (PVDF) during the traditional homogenization process and thus results in gelation; in addition, Li₃N has poor conductivity, which leads to severe polarization. Therefore, the widespread application of Li₃N is limited.

### TECHNICAL PROBLEMS

It is an object of embodiments of the present application to provide a cathode lithium-supplementing additive, a preparation method thereof, a cathode material, and a secondary battery, aiming to solve the problem of high process difficulty in the actual application of the existing cathode lithium-supplementing additives.

### TECHNICAL SOLUTIONS

To solve the above technical problems, the technical solutions adopted by the embodiment of the present application are as follows:

In a first aspect, embodiments of the present application provide a cathode lithium-supplementing additive. The cathode lithium-supplementing additive comprises a lithium-supplementing material and a coating layer coated on a surface of the lithium-supplementing material, and a material of the coating layer comprises carbon and/or nitrogen.

In a second aspect, embodiments of the present application provide a preparation method for the cathode lithium-supplementing additive. The preparation method comprises the following steps:
providing the lithium-supplementing material and the nitride and/or carbide of the transition metal;
dispersing the nitride and/or carbide of the transition metal in a solvent to form a dispersion of the nitride and/or carbide of the transition metal; and
adding the lithium-supplementing material to the dispersion of the nitride and/or carbide of the transition metal for mixing, and then sequentially performing a first calcination treatment and a first ball milling treatment, whereby obtaining a cathode lithium-supplementing additive.

In a third aspect, embodiments of the present application provide a cathode material. The cathode material comprises the cathode lithium-supplementing additive provided by the present application and/or the cathode lithium-supplementing additive prepared by the preparation method provided by the present application.

In a fourth aspect, embodiments of the present application provide a secondary battery. The secondary battery comprises the cathode material provided by the present application.

### BENEFICIAL EFFECTS

Beneficial effects of the cathode lithium-supplementing additive provided in the embodiments of the present application are summarized as follows: the cathode lithium-supplementing additive comprises the lithium-supplementing material and the coating layer coated on the surface of the lithium-supplementing material, and the material of the coating layer comprising carbon and/or nitrogen. Since the cathode lithium-supplementing additive contains the lithium-supplementing material for lithium supplementing, when the battery is in the first cycle of charging, the lithium-supplementing material can supplement the lithium ions consumed by the anode in the formation of the SEI film, so that the lithium ions in the battery system remain abundant, thereby improving the initial charging efficiency and overall electrochemical performance of the battery. Since the coating layer contained is coated on the surface of the lithium-supplementing material, the coating layer can isolate the lithium-supplementing material from contact with the air, and can avoid corrosion of the highly active lithium-supplementing material by water, oxygen, and carbon dioxide in the air, thus improving the stability of the lithium-supplementing material.

Beneficial effects of the preparation method of the cathode lithium-supplementing additive provided in the embodiments of the present application are summarized as follows: the nitride and/or carbide of the transition metal is firstly dispersed in the solvent to form the dispersion of the nitride and/or carbide of the transition metal; then the lithium-supplementing material is added to the dispersion of the nitride and/or carbide of the transition metal for mixing, and thereafter, a resulting mixture is sequentially performed with the first calcination treatment and the first ball milling treatment, so as to obtain the cathode lithium-supplementing additive. The preparation process is simple and easy to implement, and a low production cost is low. In addition, the lithium-supplementing additive prepared by the preparation method has material stability and good electrochemical performance, which is beneficial to improve the initial charging efficiency and overall electrochemical performance of the battery.

Beneficial effects of the cathode material provided in the embodiments of the present application are summarized as follows: due to the inclusion of the cathode lithium-supplementing additive provided by the present application or the cathode lithium-supplementing additive prepared by the preparation method provided by the present application, the cathode material has good material stability and electrochemical performance and can ensure that the voltage of the battery changes smoothly during the charging process.

Beneficial effects of the secondary battery provided by the embodiments of the present application are summarized as follows: due to the inclusion of the cathode material provided by the present application, in the initial charging process, the lithium-supplementing additive contained in the secondary battery of the present application can be used as a lithium source, and release lithium ions during the first charging process to achieve lithium supplementation, thereby maintaining the abundance of lithium ions in the battery system and improving the initial charging efficiency and overall charge and discharge performance of the battery.

### BRIEF DESCRIPTION OF THE DRAWINGS

In order to more clearly illustrate the specific embodiments of the present application or the technical solutions in the prior art, the drawings that need to be used in the description of the embodiments or the prior art will be briefly described hereinbelow. Obviously, the accompanying drawings in the following description are only some embodiments of the present application. For those skilled in the art, other drawings can be obtained based on these drawings without creative work.
FIG. 1 is a flow chart of a preparation method of a cathode lithium-supplementing additive provided in an embodiment of the present application;
FIG. 2 is XRD spectra of a LiN lithium-supplementing core, a lithium-supplementing material having a LiN lithium-supplementing core coated with a solid solution layer, and a cathode lithium-supplementing additive having the solid solution layer coated with a coating layer provided in Example 5; and
FIG. 3 is a capacity-voltage diagram of button batteries in which cathode lithium-supplementing additives provided in Examples 1, 5, 9 of the present application and Comparative Example 1 are added to lithium iron phosphate cathodes, respectively.

### DETAILED DESCRIPTION OF THE EMBODIMENTS

In order to make the technical problems, technical solutions, and beneficial effects to be solved in the present application clearer, the present application will be further described in detail below in conjunction with the embodiments. It should be understood that the specific embodiments described here are only used to explain the present application, but are not intended to limit the present application.

In the present application, the term "and/or" describes the association relationship of associated objects, indicating that there may be three relationships, for example, A and/or B, which may mean the following conditions: A exists alone, A and B exist simultaneously, and B exists alone. Among them, A and B can be singular or plural. The character "/" generally indicates that the contextual objects have an "or" relationship.

In the present application, "at least one" means one or more, and "multiple" means two or more. "At least one of the following" or similar expressions refers to any combination of these items, including any combination of single or plural items. For example, "at least one of a, b, or c", or "at least one of a, b, and c" can mean: a, b, c, a-b (that is, a and b), a-c, b-c, or a-b-c, in which, a, b, and c can be singular or plural.

It should be understood that in various embodiments of the present application, the sequence numbers of the above processes do not mean the order of execution, and some or all steps may be executed in parallel or sequentially, and the execution order of each process shall be determined based on its functions and internal logic and should not constitute any limitation to the implementation process of the embodiments of the present application.

Terms used in the embodiments of the present application are only for the purpose of describing specific embodiments, and are not intended to limit the present application. The singular forms "a", "said" and "the" used in the embodiments of the present application and the appended claims are also intended to include plural forms unless otherwise clearly indicated in the context.

The masses of the relevant components mentioned of the embodiments of the present application in the specification can not only refer to the specific contents of the component, but also represent the proportional relationship between the masses of the different components. The scaling up or down of the content of the fraction is within the scope disclosed the embodiments of the present application in the specification. Specifically, the mass described the embodiments of the present application in the specification may be µg, mg, g, kg and other well-known mass units in the chemical industry.

The terms "first" and "second" are adopted for descriptive purposes only to distinguish different substances and are not to be construed as indicating or implying a relative importance or implicitly indicating the number of technical features indicated. For example, without departing from the scope of the embodiments of the present application, the first XX can also be referred to as the second XX, and similarly, the second XX can also be referred to as the first XX. Thus, features prefixed by "first" and "second" will explicitly or implicitly represent that one or more of the referred technical features are included.

A first aspect of embodiments of the present application provides a cathode lithium-supplementing additive, the cathode lithium-supplementing additive comprises a lithium-supplementing material and a coating layer coated on a surface of the lithium-supplementing material. A material of the coating layer comprises carbon and/or nitrogen.

The cathode lithium-supplementing additive provided in the embodiments of the present application comprises the lithium-supplementing material and the coating layer coated on the surface of the lithium-supplementing material, and the material of the coating layer comprises the nitride and/or carbide of transition metal. Since the cathode lithium-supplementing additive contains the lithium-supplementing material for lithium supplementing, when the battery is in the first cycle of charging, the lithium-supplementing material can supplement the lithium ions consumed by the anode in the formation of the SEI film, so that the lithium ions in the battery system remain abundant, thereby improving the initial charging efficiency and overall electrochemical performance of the battery. Since the coating layer contained is coated on the surface of the lithium-supplementing material, the coating layer can isolate the lithium-supplementing material from contact with the air, and can avoid corrosion of the highly active lithium-supplementing material by water, oxygen, and carbon dioxide in the air, thus improving the stability of the lithium-supplementing material.

In an embodiment, the material of the coating layer comprises a carbon material. The carbon material includes but is not limited to at least one of a carbon black, a graphite, a carbon nanotube, a graphene, and an amorphous carbon. In a specific embodiment, the carbon material can be the amorphous carbon.

In an embodiment, the material of the coating layer comprises a nitride and/or carbide of a transition metal. The nitride and/or carbide of the transition metal may comprise any of the following: a nitride of a transition metal, a carbide of a transition metal, and a nitrocarbide of a transition metal. The coating layer provided in this embodiment is the nitride and/or carbide of the transition metal, which has conductivity and can increase the overall conductivity of the cathode lithium-supplementing additive, thereby ensuring that the voltage changes relatively smoothly during the charging process.

In an embodiment, a general formula of the nitride and/or carbide of the transition metal is MₓB_{y}, in which, 1≤x≤5; 1≤y≤3, M is selected from any one of Ti, Zr, Ta, W, and Mo, and B comprises at least one of C and N. In a specific embodiment, the nitride and/or carbide of the transition metal MₓB_{y} comprises at least one of TiN, TiC, TiCN, ZrN, ZrC, ZrCN, TaN, TaC, and TaCN.

In an embodiment, a mass percentage of the coating layer is 0.5 wt.% to 10 wt.% based on a total weight of the cathode lithium-supplementing additive being 100 wt.%. A thickness of the coating layer is 0.1 µm to 10 µm. Within the range of the mass percentage and the range of thickness of the coating layer provided in this embodiment, it can be ensured that the lithium-supplementing material is completely coated, resulting in optimal conductivity and stability of the lithium-supplementing additive. In a specific embodiment, the mass percentage of the coating layer can be but not limited to 0.5 wt.%, 1 wt.%, 2 wt.%, 3 wt.%, 4 wt.%, 5 wt.%, 6 wt.%, 7 wt.%, 8 wt.%, 9 wt.%, 10 wt.%, 20 wt.%, 30 wt.%, 40 wt.%. The thickness of the coating layer can be but not limited to 0.1 µm, 1 µm, 2 µm, 3 µm, 4 µm, 5 µm, 6 µm, 7 µm, 8 µm, 9 µm, 10 µm.

In an embodiment, the lithium-supplementing material comprises a lithium-supplementing core and a solid solution bonded to a surface layer of the lithium-supplementing core. The lithium-supplementing material provided in this embodiment contains the solid solution bonded to the surface layer of the lithium-supplementing core. The solid solution can reduce the interfacial alkalinity of the lithium-supplementing core, and can avoid gelation of the lithium-supplementing material with widely used N-methylpyrrolidone (NMP) and a polyvinylidene fluoride (PVDF) under alkaline conditions during homogenization, making the lithium-supplementing material have good stability. In addition, the solid solution has a low melting point and can act as an adhesive, which can make the lithium-supplementing core and the coating layer tightly connected, increase the tightness and integrity of the coating layer, and further improve the stability of the lithium-supplementing additive.

In an embodiment, the solid solution bonded to the surface layer of the lithium-supplementing core forms a solid solution layer that completely or partially covers the lithium-supplementing core. The solid solution layer can completely or partially cover the lithium-supplementing core. It is ideal to completely cover the lithium-supplementing core, which can minimize the surface alkalinity of the lithium-supplementing core and increase the tightness between the lithium-supplementing core and the coating layer, so that the stability of the lithium-supplementing additive is optimized.

In an embodiment, a general formula of the lithium-supplementing core is LiₑE_{f}, in which, 1≤e≤3, 1≤f≤3, and E is selected from any one of F, S, N, B, P, O, and Se. Due to containing the lithium-supplementing material which is rich in lithium and can provide abundant lithium, the lithium-supplementing core can be used as "sacrificial agent" in the first cycle of charging, such that all lithium ions are released as much as possible at one time to supplement the irreversible lithium ions consumed by the anode in the formation of the SEI film, thereby maintaining the abundance of lithium ions in the battery system and improving the initial Coulombic efficiency and overall electrochemical performance of the battery. In a specific embodiment, the LiₑE_{f} lithium-supplementing core comprises at least one of LiF, Li₂S, Li₃N, Li₃B, Li₃P, and Li₂Se. These lithium-supplementing materials have high lithium content and good stability.

In an embodiment, a general formula of the solid solution is LiₐR_{b}A_{c}, in which, 1≤a≤13, 1≤b≤5, 1≤c≤4, R is selected from any one of Ti, F, S, N, B, P, O, and Se, and A is selected from any one of F, Cl, Br, and I. Since the solid solution is rich in lithium, on the one hand, lithium ions can be released during the first cycle of charging, which can enhance the lithium-supplementing effect of the lithium-supplementing additive; on the other hand, the solid solution has low melting point, which can closely connect the lithium-supplementing core with the coating layer, being conducive to increasing the coating uniformity and integrity of the coating layer, and improving the stability of the lithium-supplementing additive. In a specific embodiment, the LiₐR_{b}A_{c} solid solution comprises at least one of Li3SF, Li₃SCl, Li₃SBr, Li₃SI, Li₄NF, Li₄NCl, Li₅NBr₂, Li₄NI, Li₄BF, Li₄BCl, Li₄BBr, Li₄BI, Li₄PF, Li₄PCl, Li₄PBr, Li₄PI, Li₃SeF, Li₃SeCl, Li₃SeBr, Li₃SeI, Li_{0.33}Ti_{0.33}Cl, and LisTiN. Such solid solution has low melting point and good bonding effect.

In an embodiment, in the cathode lithium-supplementing additive, a mass percentage of the solid solution layer is 0.1 wt.% to 3 wt.%. A thickness of the solid solution layer is 0.1 µm to 10 µm. Within the above ranges of the mass percentage and thickness of the solid solution layer provided in this embodiment, it can be ensured that the lithium-supplementing core is completely coated, the surface alkalinity of the lithium-supplementing core can be reduced to a maximum extent, and the stability of the lithium-supplementing additive can be enhanced; and meanwhile, the tightness between the lithium-supplementing core and the coating layer can be increased, and the stability of the lithium-supplementing additive can be further enhanced, so that the stability of the lithium-supplementing additive can be optimized. Specifically, the mass percentage of the solid solution layer can be but not limited to 0.1 %, 1 %, 1.5 %, 2 %, 2.5 %, 3 %, 10 %, 20 %, 30 %, and 40 %. The thickness of the coating layer can be but not limited to 0.1 µm, 1 µm, 2 µm, 3 µm, 4 µm, 5 µm, 6 µm, 7 µm, 8 µm, 9 µm, and 10 µm.

In an embodiment, the total weight of the cathode lithium-supplementing additive is calculated as 100 wt.%, and the mass percentage of the lithium-supplementing core is 87 wt.% to 98.5 wt.%. In a specific embodiment, the mass percentage of the lithium-supplementing core can be but not limited to 87 wt.%, 89 wt.%, 92 wt.%, 94 wt.%, 96 wt.%, 98.5 wt.%. By controlling and optimizing the content of the lithium-supplementing core, the lithium-supplementing core can be improved to fully play the role of lithium supplementing, thereby maintaining the abundance of lithium ions in the battery system and improving the initial Coulombic efficiency and overall electrochemical performance of the battery.

In an embodiment, a particle size of the lithium-supplementing core is 0.1 µm to 50 µm. In this embodiment, the particle size of the core is controlled, on the one hand, the content of the lithium-supplementing core in the cathode lithium-supplementing additive can be controlled, thereby optimizing the lithium-supplementing effect of the cathode lithium-supplementing additive; on the other hand, the lithium-supplementing core, the solid solution layer, and the coating layer together can achieve the control of the overall particle size of the cathode lithium-supplementing additive. In a specific embodiment, the particle size of the lithium-supplementing material core can be but not limited to 0.1 µm, 5 µm, 10 µm, 20 µm, 30 µm, 40 µm, 50 µm.

In an embodiment, a particle size of the cathode lithium-supplementing additive is 0.2 µm to 60 µm. Within the above range of particle size of the cathode lithium-supplementing additive provided in the embodiment of the present application, the conductivity and stability of the cathode lithium-supplementing additive can be optimized. In a specific embodiment, the particle size of the cathode lithium-supplementing additive can be but not limited to 0.2 µm, 5 µm, 10 µm, 20 µm, 30 µm, 40 µm, 50 µm, and 60 µm.

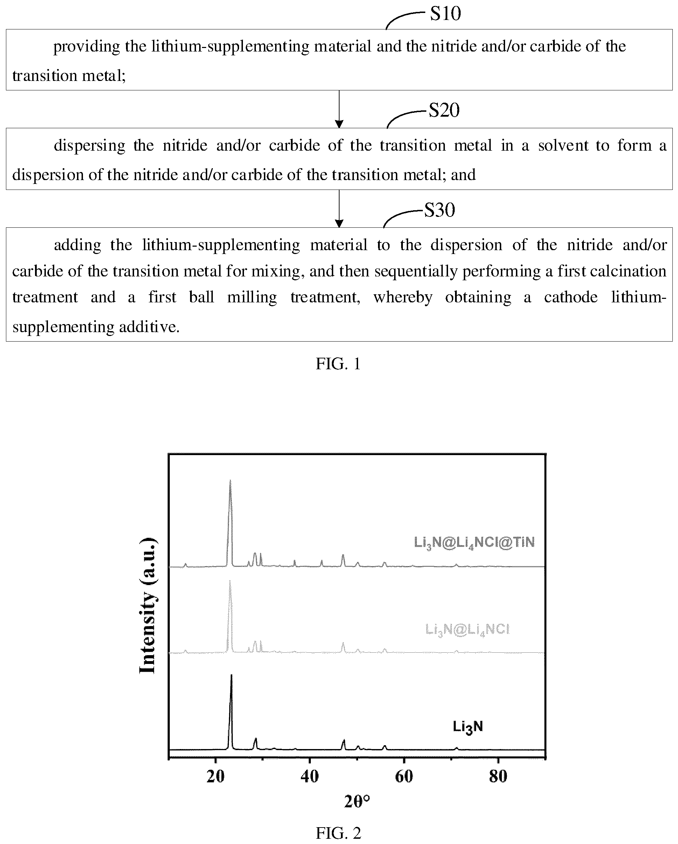

A second aspect of embodiments of the present application provides a preparation method for the cathode lithium-supplementing additive. As shown in FIG. 1, the method comprises the following steps:
S 10, providing the lithium-supplementing material and the nitride and/or carbide of the transition metal;
S20, dispersing the nitride and/or carbide of the transition metal in a solvent to form a dispersion of the nitride and/or carbide of the transition metal; and
S30, adding the lithium-supplementing material to the dispersion of the nitride and/or carbide of the transition metal for mixing, and then sequentially performing a first calcination treatment and a first ball milling treatment, whereby obtaining a cathode lithium-supplementing additive.

In the preparation method for the cathode lithium-supplementing additive provided in the embodiments of the present application, the nitride and/or carbide of the transition metal is firstly dispersed in the solvent to form the dispersion of the nitride and/or carbide of the transition metal; then the lithium-supplementing material is added to the dispersion of the nitride and/or carbide of the transition metal for mixing, and thereafter, a resulting mixture is sequentially performed with the first calcination treatment and the first ball milling treatment, so as to obtain the cathode lithium-supplementing additive. The preparation process is simple and easy to implement, and a low production cost is low. In addition, the lithium-supplementing additive prepared by the preparation method has material stability and good electrochemical performance, which is beneficial to improve the initial charging efficiency and overall electrochemical performance of the battery.

In step S 10, the lithium-supplementing material may comprise two situations, a first situation is that the lithium-supplementing material only contains the lithium-supplementing core, while a second situation is that the lithium-supplementing material contains both the lithium-supplementing core and the solid solution layer. The lithium-supplementing material containing only the lithium-supplementing core is described in the above and will not be repeated herein. The preparation method of the lithium-supplementing material containing both the lithium-supplementing core and the solid solution layer comprises: mixing a lithium halide with the lithium-supplementing core, and then sequentially performing a second calcination treatment and a second ball milling treatment, whereby obtaining the lithium-supplementing material. A specific embodiment of lithium halide may comprise at least one of LiF, LiCl, LiBr, and LiI. In this embodiment, the lithium halide and the lithium-supplementing core are firstly mixed and ball milled to make the lithium halide uniformly dispersed on the surface layer of the lithium-supplementing core, and then a second calcination treatment is performed to make the lithium halide melt at high temperature and intercalated into the surface layer of the lithium-supplementing core to form a solid solution layer, and then a second ball milling treatment is performed to obtain a lithium-supplementing material that meets the particle size requirements and has uniform size.

In an embodiment, a molar ratio of the lithium halide to the lithium-supplementing core is (1 to 100): 1. Within this molar ratio range of the lithium halide to the lithium-supplementing core provided in this embodiment, it is beneficial for the lithium halide to be intercalated into the surface layer of the lithium-supplementing core to form a uniform solid solution layer, and the lithium-supplementing core can be coated best, so that the stability of the lithium-supplementing material is optimal. In a specific embodiment, the molar ratio of the lithium halide to the lithium-supplementing core can be but is not limited to 1:1, 5:1, 10:1, 20:1, 30:1, 40:1, 50:1, 60:1, 70:1, 80:1, 90:1, and 100:1.

In an embodiment, conditions for the second calcination treatment comprise: a holding temperature of 400°C to 900°C and a holding time of 1 hr to 24 hrs. Within this range of the holding temperature provided in the embodiment of the present application, the sintering temperature can be greater than or equal to the melting point of the lithium halide, which can promote the melting of the lithium halide and form a solid solution layer together with the surface layer of the lithium-supplementing core. Within this range of the holding time provided in the embodiment of the present application, it is beneficial for the lithium halide to form a uniform solid solution layer on the surface layer of the lithium-supplementing core, and the energy consumption cost is low. In a specific embodiment, the holding temperature can be but not limited to 400°C, 500°C, 600°C, 700°C, 800°C, and 900°C. The holding time can be but not limited to 1 hr, 5 hrs, 10 hrs, 15 hrs, 20 hrs, and 24 hrs.

In step S20, the carbide of the transition metal is dispersed in a solvent to form a dispersion of the carbide of the transition metal; or alternatively, the nitride of the transition metal is dispersed in a solvent to form a dispersion of the nitride of the transition metal; or alternatively, the nitrocarbide of the transition metal is dispersed in a solvent to form a dispersion of the nitrocarbide of the transition metal. In an embodiment, the solvent may comprise at least one of N,N-dimethylformamide, tetrahydrofuran, n-hexane, and benzene.

In step S30, the lithium-supplementing material is firstly added to the dispersion of the carbide of the transition metal and mixed evenly by stirring, and then the first calcination treatment is performed to volatilize the solvent in the dispersion to obtain a cathode lithium-supplementing additive in the form of the lithium-supplementing material coated with the carbide of the transition metal; or alternatively, the lithium-supplementing material is firstly added to the dispersion of the nitride of the transition metal and mixed evenly by stirring, and then the first calcination treatment is performed to volatilize the solvent in the dispersion to obtain a cathode lithium-supplementing additive in the form of the lithium-supplementing material coated with the nitride of the transition metal; or alternatively, the lithium-supplementing material is first added to the dispersion of the nitrocarbide of the transition metal and mixed evenly by stirring, and then the first calcination treatment is performed to volatilize the solvent in the dispersion to obtain a cathode lithium-supplementing additive in the form of the lithium-supplementing material coated with the nitrocarbide of the transition metal. Finally, by performing the first ball milling treatment, a cathode lithium-supplementing additive that meets the particle size requirements and has uniform size can be obtained.

In an embodiment, conditions for the first calcination treatment comprise: a holding temperature of 400°C to 900°C and a holding time of 1 hr to 24 hrs. Within this range of the holding temperature provided in the embodiment of the present application, the sintering temperature can be greater than or equal to the melting point temperature of the solid solution, which can promote the infiltration of the solid solution layer and the coating layer, and is conducive to the formation of a cathode lithium-supplementing additive having uniformly coated the lithium-supplementing material. Within this range of the holding time provided in the embodiment of the present application, it can be ensured that the solid solution layer and the coating layer are completely infiltrated, thereby forming a uniform coating layer on the surface of the solid solution layer, and the energy consumption cost is low. In a specific embodiment, the holding temperature can be but not limited to 400°C, 500°C, 600°C, 700°C, 800°C, and 900°C. The holding time can be but not limited to 1 hr, 5 hrs, 10 hrs, 15 hrs, 20 hrs, and 24 hrs.

In a third aspect, the present application provides a cathode material, which comprises the cathode lithium-supplementing additive provided by the present application and/or the cathode lithium-supplementing additive prepared by the preparation method provided by the present application.

In the cathode material provided by the present application, due to the inclusion of the cathode lithium-supplementing additive provided by the present application or the cathode lithium-supplementing additive prepared by the preparation method provided by the present application, the cathode material provided by the present application has good material stability and electrochemical performance and can ensure that the voltage of the battery changes smoothly during the charging process.

In a fourth aspect, the present application provides a secondary battery, which comprises the cathode material provided by the present application.

In the secondary battery provided by embodiments of the present application, due to the inclusion of the cathode material provided by the present application, in the initial charging process, the lithium-supplementing additive contained in the secondary battery of the present application can be used as a lithium source, and release lithium ions during the first charging process to achieve lithium supplementation, thereby maintaining the abundance of lithium ions in the battery system and improving the initial charging efficiency and overall charge and discharge performance of the battery.

The following is an explanation in conjunction with specific examples.

### FIRST, Cathode lithium-supplementing additive and preparation method thereof

### Example 1

This example provides a cathode lithium-supplementing additive and a preparation method thereof. The cathode lithium-supplementing additive comprises a LiN lithium-supplementing core and a TiN coating layer coated on a surface of the lithium-supplementing core, namely LiN @ TiN.

The preparation method of the cathode lithium-supplementing additive of this example was prepared by the following steps:

In step S10, a LiN lithium-supplementing core and TiN were provided;

In step S20, TiN was added to an N,N-dimethylformamide solvent, a resulting mixture was ultrasonically dispersed for 1 hr to 10 hrs, and a TiN dispersion with a mass percentage of 5 wt.% to 20 wt.% was obtained; and

In step S30, the LiN lithium-supplementing core was added to the TiN dispersion and mixed with the TiN dispersion by stirring to yield a mixed slurry, and then the mixed slurry was loaded into a corundum boat, which was then placed in a tube furnace protected by an inert gas, heated to a temperature of 400°C to 900°C, and this temperature was hold for 1 hr to 24 hrs, after that, a resulting matter was cooled naturally, and finally ball milled to yield a cathode lithium-supplementing additive containing a LiN lithium-supplementing core coated with TiN.

It was known from the test that the particle size of the LiN lithium-supplementing core was 1 µm to 8 µm, the thickness of the TiN coating layer was 10 nm to 30 nm, and the particle size of the lithium-supplementing additive was 1.01 µm to 8.05 µm.

### Example 2

This example provides a cathode lithium-supplementing additive and a preparation method thereof. The cathode lithium-supplementing additive comprises a LiN lithium-supplementing core and a TiC coating layer coated on a surface of the lithium-supplementing core, namely LiN @ TiC.

The preparation method of the lithium-supplementing additive in this example is different from that in Example 1 in that, in step S10 of this example, a LiN lithium-supplementing core and TiC were provided.

It was known from the test that the particle size of the LiN lithium-supplementing core was 1 µm to 8 µm, the thickness of the TiC coating layer was 10 nm to 30 nm, and the particle size of the lithium-supplementing additive was 1.01 µm to 8.05 µm.

### Example 3

This example provides a cathode lithium-supplementing additive and a preparation method thereof. The cathode lithium-supplementing additive comprises a LiP lithium-supplementing core and a TiC coating layer coated on a surface of the lithium-supplementing core, namely LiP @ TiC.

The preparation method of the lithium-supplementing additive in this example is different from that in Example 1 in that, in step S10 of this example, a LiP lithium-supplementing core and TiC are provided.

It was known from the test that the particle size of the LiP lithium-supplementing core was 1 µm to 8 µm, the thickness of the TiC coating layer was 10 nm to 30 nm, and the particle size of the lithium-supplementing additive was 1.01 µm to 8.05 µm.

### Example 4

This example provides a cathode lithium-supplementing additive and a preparation method thereof. The cathode lithium-supplementing additive comprises a Li₂S lithium-supplementing core and a TiNC coating layer coated on a surface of the lithium-supplementing core, namely Li₂S @ TiNC.

The preparation method of the lithium-supplementing additive in this example is different from that in Example 1 in that, in step S10 of this example, a Li₂S lithium-supplementing core and TiNC are provided.

It was known from the test that the particle size of the Li₂S lithium-supplementing core was 1 µm to 8 µm, the thickness of the TiNC coating layer was 10 nm to 30 nm, and the particle size of the lithium-supplementing additive was 1.01 µm to 8.05 µm.

### Example 5

This example provides a cathode lithium-supplementing additive and a preparation method thereof. The cathode lithium-supplementing additive comprises a LiN lithium-supplementing core, and a surface layer of the lithium-supplementing core is sequentially coated with a Li₄NCl solid solution layer and a TiN coating layer.

The preparation method of the cathode lithium-supplementing additive of this example was prepared by the following steps:

In step S10, a LiN lithium-supplementing core, LiCl, and TiN were provided;

In step S20, according to a molar ratio of (1-100): 1, the LiN lithium-supplementing core and LiCl were mixed and ball milled for 1 hr to 24 hrs to obtain a mixture, then the mixture was loaded into a corundum boat, which was then placed in a tube furnace protected by an inert gas, heated to a temperature of 400°C to 900°C, and this temperature was hold for 1 hr to 24 hrs, after that, a resulting matter was cooled naturally, and finally ball milled to yield a lithium-supplementing material having the LiN lithium-supplementing core coated with the Li₄NCl solid solution layer, that is, LiN @ Li₄NCl;

In step S30, TiN was added to an N,N-dimethylformamide solvent, a resulting mixture was ultrasonically dispersed for 1 hr to 10 hrs, and a TiN dispersion with a mass percentage of 5 wt.% to 20 wt.% was obtained;

In step S40, the LiN @ Li₄NCl obtained in step S20 was added to the TiN dispersion and mixed with the TiN dispersion by stirring to yield a mixed slurry. The mixed slurry was then loaded into a corundum boat, which was then placed in a tube furnace protected by an inert gas, heated to a temperature of 400°C to 900°C, and this temperature was hold for 1 hr to 24 hrs, after that, a resulting matter was cooled naturally, and finally ball milled to yield a cathode lithium-supplementing additive having the Li₄NCl solid solution layer coated with TiN, that is, LiN @ Li₄NCl @ TiN.

It was known from the test that the particle size of the LiN lithium-supplementing core was 1 µm to 8 µm, the thickness of the Li₄NCl solid solution layer was 10 nm to 30 nm, the thickness of the TiN coating layer was 10 nm to 30 nm, and the particle size of the lithium-supplementing additive was 1.02 µm to 8.1 µm.

### Example 6

This example provides a cathode lithium-supplementing additive and a preparation method thereof. The cathode lithium-supplementing additive comprises a LiN lithium-supplementing core, and a surface layer of the lithium-supplementing core is sequentially coated with a Li₅NBr₂ solid solution layer and a TiC coating layer.

The preparation method of the lithium-supplementing additive in this example is different from that in Example 4 in that, in step S10 of this example, a LiN lithium-supplementing core, LiBr, and TiC were provided.

It was known from the test that the particle size of the LiN lithium-supplementing core was 1 µm to 8 µm, the thickness of the Li₅NBr₂ solid solution layer was 10 nm to 30 nm, the thickness of the TiC coating layer was 10 nm to 30 nm, and the particle size of the lithium-supplementing additive was 1.02 µm to 8.1 µm.

### Example 7

This example provides a cathode lithium-supplementing additive and a preparation method thereof. The cathode lithium-supplementing additive comprises a LiP lithium-supplementing core, and a surface layer of the lithium-supplementing core is sequentially coated with a Li_{0.33}Ti_{0.33}Cl solid solution layer and a TiC coating layer.

The preparation method of the lithium-supplementing additive of this example is different from that of example 4 in that, in step S10 of this example, a LiP lithium-supplementing core, LiCl, and TiC were provided.

It was known from the test that the particle size of the LiP lithium-supplementing core was 1 µm to 8 µm, the thickness of the Li_{0.33}Ti_{0.33}Cl solid solution layer was 10 nm to 30 nm, the thickness of the TiC coating layer was 10 nm to 30 nm, and the particle size of the lithium-supplementing additive was 1.02 µm to 8.1 µm.

### Example 8

This example provides a cathode lithium-supplementing additive and a preparation method thereof. The cathode lithium-supplementing additive comprises a Li₂S lithium-supplementing core, and a surface layer of the lithium-supplementing core is coated with a LisTiN solid solution layer and a TiNC coating layer in sequence.

The preparation method of the lithium-supplementing additive in this example is different from that in Example 1 in that, in step S10 of this example, a Li₂S lithium-supplementing core and TiNC are provided.

It was known from the test that the particle size of the Li₂S lithium-supplementing core was 1 µm to 8 µm, the thickness of the LisTiN solid solution layer was 10 nm to 30 nm, the thickness of the TiNC coating layer was 10 nm to 30 nm, and the particle size of the lithium-supplementing additive was 1.02 µm to 8.1 µm.

### Example 9

This example provides a cathode lithium-supplementing additive and a preparation method thereof, the cathode lithium-supplementing additive comprises a LiN lithium-supplementing core and an amorphous carbon layer coated on a surface of the lithium-supplementing core, namely, a LiN @ amorphous carbon layer.

The preparation method of the cathode lithium-supplementing additive in the core-shell structure of this example was prepared by the following steps:

In step S10, a LiN lithium-supplementing core was provided; and

In step S20, the LiN lithium-supplementing material and a carbon source binder were mixed and granulated, and then carbonized to form a LiN lithium-supplementing core coated with an amorphous carbon coating layer.

It was known from the test that the particle size of the LiN lithium-supplementing core was 1 µm to 8 µm, the thickness of the amorphous carbon coating layer was 10 nm to 30 nm, and the particle size of the lithium-supplementing additive was 1.01 µm to 8.05 µm.

### Comparative Example 1

This comparative example provides a LiN lithium-supplementing material.

### SECOND, Test and analysis of related characteristics

1. Structural characterization of the cathode lithium-supplementing additive
the LiN lithium-supplementing core, the lithium-supplementing material having the LiN lithium-supplementing core coated with the solid solution layer, and the cathode lithium-supplementing additive having the solid solution layer coated with the coating layer provided in Example 5 were subjected to X-ray diffraction analysis, and the XRD spectra were shown in FIG. 2. From the XRD spectrum of the LiN lithium-supplementing core, it can be seen that all diffraction peaks correspond to the characteristic peaks of LiN. From the XRD spectrum of the lithium-supplementing material having the LiN lithium-supplementing core coated with the solid solution layer, it can be seen that, except for the diffraction peak corresponding to the characteristic peak of LiN, the remaining diffraction peaks correspond exactly to the characteristic peaks of Li₄NCl, indicating that the surface layer of the LiN lithium-supplementing core is coated with the Li₄NCl solid solution layer. From the XRD spectrum of the cathode lithium-supplementing additive having the solid solution layer coated with TiN, it can be seen that, except for the diffraction peaks corresponding to the characteristic peaks of LiN and Li₄NCl, the remaining diffraction peaks correspond exactly to the characteristic peaks of TiN, indicating that the surface of the Li₄NCl solid solution layer is coated with a TiN coating layer.
2. Test and analysis of electrochemical performance of lithium-ion batteries:
Components in following mass percentages: 5 wt.% of the cathode lithium-supplementing additive, 80 wt.% of lithium iron phosphate (LFP) as the cathode material, 10 wt.% of a polyvinylidene fluoride (PVDF) binder, 5 wt.% of a conductive agent carbon black (Super P) were collected, and mixed in N-methylpyrrolidone as a solvent to prepare a slurry. The slurry was homogenized and coated to prepare a cathode plate. A resulting button battery was charged at a 0.1 C constant current and a constant voltage in a range of 2.0 V to 3.7 V, and a cut-off current was 0.02 C, to test a charging and discharging performance of the button battery. The test results were listed in Table 1.

**Table 1**

| | Lithiumsupplem enting core | Solid solution layer | Coating layer | Capacity (mAh/g) | Lithium nitride delithiatio n number in the first cycle (number) | Air humidity, holding time (hrs) | Content of Lithium hydroxide after holding |
|---|---|---|---|---|---|---|---|
| Exampl e 1 | Li₃N | \ | TiN | 1390 | 1.8 | 20%, 24 | 30 |
| Exampl e 2 | Li₃N | \ | TiC | 1410 | 1.8 | 20%, 24 | 30 |
| Exampl e3 | Li₃P | \ | TiC | 622 | 1.2 | 20%, 24 | - |
| Exampl e 4 | Li2S | \ | TiNC | 875 | 1.5 | 20%, 24 | - |
| Exampl e 5 | Li₃N | Li₄NCl | TiN | 2162 | 2.7 | 20%, 24 | 20 |
| Exampl e 6 | Li₃N | Li₅NBr₂ | TiC | 2008 | 2.6 | 20%, 24 | 22 |
| Exampl e7 | Li₃P | Li_{0.33}Ti_{0.33} Cl | TiC | 1244 | 2.4 | 20%, 24 | |
| Exampl e 8 | Li2S | LisTiN | TiNC | 990 | 1.7 | 20%, 24 | |
| Exampl e 9 | Li₃N | \ | Amorph ous carbon | 617 | 0.8 | 20%, 24 | 54 |
| Compa rative Exampl e 1 | Li₃N | \ | \ | 386 | 0.5 | 20%, 24 | 62 |

As shown in Table 1, compared with Comparative Example 1, the cathode lithium-supplementing additives containing the coating layer provided by the present application, such as Example 1 and Example 2, after being placed in air with a relative humidity of 20% for 24 hrs, the content of lithium hydroxide was significantly lower than that of Comparative Example 1, indicating that the formation of a coating layer on a surface of the lithium-supplementing core can improve the stability of the lithium-supplementing material. For the cathode lithium-supplementing additives containing an intermediate solid solution layer in Example 5 and Example 6, the contents of lithium hydroxide were lower than those of Example 1 and Example 2, and their capacities and the number of lithium nitride delithiation in the first cycle were significantly better than those in Examples 1 and 2, indicating that the synergistic effect of the solid solution layer and the surface coating layer formed on the surface of the lithium-supplementing core can further improve the stability of the lithium-supplementing material, so the battery had better initial charging efficiency and overall electrochemical performance.

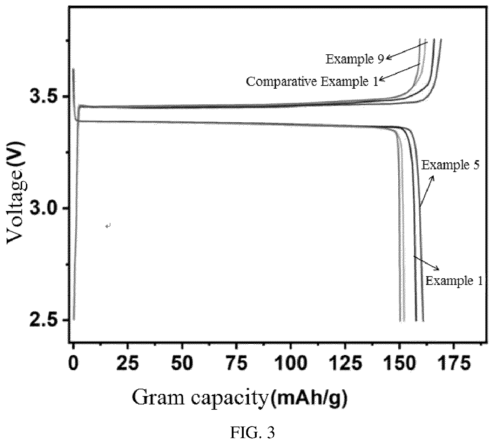

FIG. 3 is a capacity-voltage diagram of button batteries in which cathode lithium-supplementing additives provided in Examples 1, 5, 9 of the present application and Comparative Example 1 are added to lithium iron phosphate cathodes, respectively. It can be seen from FIG. 3 that after adding the cathode lithium-supplementing additive, the initial Coulombic efficiencies of LFP were all greater than 94%, among which the initial Coulombic efficiency of Example 5 was 96%. The comparison of discharge capacity shows that the gram capacity of LFP was significantly improved after adding the cathode lithium-supplementing additive. Comparison between Example 1 and Comparative Example 1 shows that the presence of the coating layer increased the gram capacity of LFP by 5%, which was attributed to the coating layer that can reduce the surface alkalinity of the Li₃N lithium-supplementing core and avoid the loss of the lithium-supplementing core caused by the reaction with NMP or PVDF during the homogenization process. Comparison between Example 1 and Example 9 shows that compared with the amorphous carbon coating layer, the coating effect of TiN coating layer was better, which was due to the better conductivity and fewer surface defects of TiN. Comparison between Example 5 and Example 1 shows that the capacity was increased by 3%, which was due to the synergistic effect of the addition of the intermediate solid solution layer and the TiN coating layer, so that the lithium-supplementing core had a tighter surface coating and better stability.

The above description is only preferred embodiments of the present application and is not intended to limit the present application. Any modifications, equivalent substitutions, and improvements made within the spirit and principles of the present application should fall within the protection scope of the present application.

## Claims

1. A cathode lithium-supplementing additive, **characterized in that** the cathode lithium-supplementing additive comprises a lithium-supplementing material and a coating layer coated on a surface of the lithium-supplementing material, and a material of the coating layer comprises carbon and/or nitrogen.

2. The cathode lithium-supplementing additive according to claim 1, wherein the material of the coating layer comprises a nitride and/or carbide of a transition metal.

3. The cathode lithium-supplementing additive according to claim 1, wherein the material of the coating layer comprises a carbon material.

4. The cathode lithium-supplementing additive according to claim 2, wherein a general formula of the nitride and/or carbide of the transition metal is MₓB_{y}, wherein 1≤x≤5; 1≤y≤3, M is selected from any one of Ti, Zr, Ta, W, and Mo, and B comprises at least one of C and N.

5. The cathode lithium-supplementing additive according to claim 1, wherein a mass percentage of the coating layer is 0.5 wt.% to 50 wt.%, based on a total weight of the cathode lithium-supplementing additive being 100 wt.%.

6. The cathode lithium-supplementing additive according to claim 1, wherein a thickness of the coating layer is 0.1 µm to 10 µm.

7. The cathode lithium-supplementing additive according to any one of claims 1-6, wherein the lithium-supplementing material comprises a lithium-supplementing core and a solid solution bonded to a surface layer of the lithium-supplementing core.

8. The cathode lithium-supplementing additive according to claim 7, wherein the solid solution bonded to the surface layer of the lithium-supplementing core forms a solid solution layer that completely or partially covers the lithium-supplementing core.

9. The cathode lithium-supplementing additive according to claim 7, wherein a general formula of the solid solution is LiₐR_{b}A_{c}, wherein 1≤a≤13, 1≤b≤5, 1≤c≤4, R is selected from any one of Ti, F, S, N, B, P, O, and Se, and A is selected from any one of F, Cl, Br, and I.

10. The cathode lithium-supplementing additive according to claim 8, wherein in the cathode lithium-supplementing additive, a mass percentage of the solid solution layer is 0.1 wt.% to 40 wt.%.

11. The cathode lithium-supplementing additive according to claim 8, wherein a thickness of the solid solution layer is 0.1 µm to 10 µm.

12. The cathode lithium-supplementing additive according to any one of claims 8-11, wherein a general formula of the lithium-supplementing core is LiₑE_{f}, wherein 1≤e≤3, 1≤f≤3, and E is selected from any one of F, S, N, B, P, O, and Se.

13. The cathode lithium-supplementing additive according to any one of claims 8-11, wherein a particle size of the lithium-supplementing core is 0.1 µm to 50 µm.

14. The cathode lithium-supplementing additive according to any one of claims 8-11, wherein a particle size of the cathode lithium-supplementing additive is 0.2 µm to 60 µm.

15. A preparation method for the cathode lithium-supplementing additive according to any one of claims 7-14, **characterized by** comprising the following steps:
providing the lithium-supplementing material and the nitride and/or carbide of the transition metal;
dispersing the nitride and/or carbide of the transition metal in a solvent to form a dispersion of the nitride and/or carbide of the transition metal; and
adding the lithium-supplementing material to the dispersion of the nitride and/or carbide of the transition metal for mixing, and then sequentially performing a first calcination treatment and a first ball milling treatment, whereby obtaining a cathode lithium-supplementing additive.

16. The preparation method according to claim 15, wherein a preparation method of the lithium-supplementing material comprises:
mixing a lithium halide with the lithium-supplementing core, and then sequentially performing a second calcination treatment and a second ball milling treatment, whereby obtaining the lithium-supplementing material.

17. The preparation method according to claim 16, wherein a molar ratio of the lithium halide to the lithium-supplementing core is (1 to 100): 1.

18. The preparation method according to claim 16 or 17, wherein
conditions for the first calcination treatment comprise: a holding temperature of 400°C to 900°C and a holding time of 1 hr to 24 hrs; and/or
conditions for the second calcination treatment comprise: a holding temperature of 400°C to 900°C and a holding time of 1 hr to 24 hrs.

19. A cathode material, wherein the cathode material comprises the cathode lithium-supplementing additive according to any one of claims 1-14 and/or the cathode lithium-supplementing additive prepared by the preparation method according to any one of claims 15-18.

20. A secondary battery, wherein the secondary battery comprises the cathode material according to claim 19.
